# EUROPÄISCHE PATENTANMELDUNG

(11) **EP 4 106 106 A1**
(43) Veröffentlichungstag der Anmeldung: **21.12.2022**
(21) Anmeldenummer: 21180140.2
(22) Anmeldetag: 17.06.2021
(51) Int. Cl.: H01Q 1/52, H01Q 21/06, H01Q 21/24, H01Q 21/28

(54) **ANTENNENANORDNUNG, TRANSCEIVERANORDNUNG UND KOMMUNIKATIONSSYSTEM**

(71) Anmelder: Rosenberger Hochfrequenztechnik GmbH & Co. KG, 83413 Fridolfing (DE)
(72) Erfinder: Winkler, Johannes, 83373 Tengling (DE)
(74) Vertreter: Lorenz, Markus

(57) **Zusammenfassung**

Die Erfindung betrifft eine Antennenanordnung (1) zur Verwendung innerhalb eines Vollduplex-Kommunikationskanals, aufweisend zumindest eine erste planare Empfangsantenne (4) und eine Sendeantennengruppe mit einer ersten planaren Sendeantenne (2) und einer zweiten planaren Sendeantenne (3). Die Sendeantennen (2, 3) und die erste Empfangsantenne (4) sind mit ihren jeweiligen Hauptflächen (6) parallel zu einer gemeinsamen Basisfläche (7) um ein gemeinsames Drehzentrum (Z) herum angeordnet, wobei die Sendeantennen (2, 3) um das Drehzentrum (Z) 180° zueinander verdreht angeordnet sind. Die erste Empfangsantenne (4) weist zu beiden Sendeantennen (2, 3) denselben Mitte-zu-Mitte-Abstand (D) auf.

## Beschreibung

Die Erfindung betrifft eine Antennenanordnung zur Verwendung innerhalb eines Vollduplex-Kommunikationskanals, aufweisend zumindest eine erste planare Empfangsantenne und eine Sendeantennengruppe mit einer ersten planaren Sendeantenne und einer zweiten planaren Sendeantenne.

Die Erfindung betrifft außerdem eine Transceiveranordnung, aufweisend eine Antennenanordnung und eine Schaltungsanordnung mit einer Sendeeinheit und einer Empfangseinheit.

Die Erfindung betrifft ferner ein Kommunikationssystem, aufweisend eine erste Transceiveranordnung und eine zweite Transceiveranordnung, zur Bereitstellung einer drahtlosen Signalübertragung.

Zur kontaktlosen bzw. drahtlosen Energie- und Datenübertragung werden Antennenanordnungen aus einer Antenne oder mehreren Antennen verwendet. Zum gleichzeitigen Senden und Empfangen elektromagnetischer Wellen (sogenannter Vollduplex-Betrieb), also zur Verwendung der Antennenanordnung innerhalb eines Kommunikationskanals, der das Senden und Empfangen der Signale simultan bei gleicher Frequenz vorsieht ("Inband-Vollduplex"), ist eine hohe elektromagnetische Dämpfung bzw. Isolation zwischen Sender und Empfänger innerhalb desselben Transceivers wesentlich, um das Übersprechen bzw. um Interferenzen zwischen Sender und Empfänger zu vermeiden.

Um eine ausreichende elektromagnetische Isolierung zwischen Sender und Empfänger innerhalb eines Inband-Vollduplex-Kommunikationskanals bereitzustellen, sind bereits verschiedene technische Ansätze bekannt. Eine Möglichkeit ist die Übertragung mit verschiedenen Polarisationen (Polarisationsdiversität), wobei die beiden Kommunikationspartner die elektromagnetischen Wellen beispielsweise mit zirkularer Polarisation übertragen (mitunter auch als "Kreuzpolarisation" bekannt), bei jeweils unterschiedlicher Drehrichtung. Gemäß einer weiteren Technik werden die elektromagnetischen Wellen ausgehend von den beiden Kommunikationspartnern mit speziellen Abstrahlcharakteristika übertragen, um eine Interferenz zwischen Sender und Empfänger weitestgehend zu vermeiden. Als weiteres Beispiel sei eine metallische Schirmung zwischen Sende- und Empfangsantennen einer gemeinsamen Antennenanordnung genannt, wie in der Veröffentlichung "Circularly Polarized PIFA Array For Simultaneous Transmit And Receive Applications", A. Kee, M. Elmansouri, D. S. Filipovic, 2017 IEEE International Symposium on Antennas and Propagation, pp. 2303-2304, vorgeschlagen.

Das Isolationsverhalten der bekannten Antennenanordnungen ist mitunter allerdings nach wie vor nicht ausreichend oder kann nur durch außerordentlich komplexe Antennen- und Schaltungsanordnungen und damit hohem Herstellungs- und Kostenaufwand erreicht werden.

In Anbetracht des bekannten Stands der Technik besteht die Aufgabe der vorliegenden Erfindung darin, eine Antennenanordnung zur Verwendung innerhalb eines Vollduplex-Kommunikationskanals bereitzustellen, die hohe Isolationseigenschaften zwischen Sender und Empfänger bei vorzugsweise geringer Komplexität aufweist.

Schließlich ist es auch Aufgabe der Erfindung, eine Transceiveranordnung und ein verbessertes Kommunikationssystem bereitzustellen, mit einer Antennenanordnung zur Verwendung innerhalb eines Vollduplex-Kommunikationskanals mit hohen Isolationseigenschaften zwischen Sender und Empfänger, bei vorzugsweise geringer Komplexität.

Die Aufgabe wird für die Antennenanordnung mit den in Anspruch 1 aufgeführten Merkmalen gelöst. Bezüglich der Transceiveranordnung wird die Aufgabe durch die Merkmale des Anspruchs 11 und betreffend das Kommunikationssystem durch Anspruch 13 gelöst.

Die abhängigen Ansprüche und die nachfolgend beschriebenen Merkmale betreffen vorteilhafte Ausführungsformen und Varianten der Erfindung.

Es ist eine Antennenanordnung zur Verwendung innerhalb eines Vollduplex-Kommunikationskanals vorgesehen. Die Antennenanordnung weist zumindest eine erste planare Empfangsantenne und eine Sendeantennengruppe mit einer ersten planaren Sendeantenne und einer zweiten planaren Sendeantenne auf.

Unter einer "planaren" Antenne ist vorstehend und nachfolgend eine Antenne mit vornehmlich flacher und vorzugsweise ebener Ausprägung zu verstehen, die insbesondere zwei voneinander abgewandte, vorzugsweise parallel verlaufende Hauptflächen aufweist, also beispielsweise in der Art einer Scheibe, einer Beschichtung oder eines Plättchens. Insbesondere kann es sich bei einer planaren Antenne um eine Patchantenne oder um eine Schlitzantenne handeln, wie dies nachfolgend noch konkret vorgeschlagen wird.

Die Sendeantennen und Empfangsantenne(n) werden nachfolgend zur Vereinfachung mitunter auch ohne die Spezifizierung "planar" genannt und teilweise außerdem unter dem Begriff "Antennen" zusammengefasst.

Erfindungsgemäß sind die Sendeantennen und die erste Empfangsantenne mit ihren jeweiligen Hauptflächen parallel zu einer gemeinsamen Basisfläche um ein gemeinsames Drehzentrum herum angeordnet.

Die Antennen können auf der Basisfläche aufliegen und/oder an der Basisfläche befestigt sein. Die Antennen können auch von der Basisfläche beabstandet sein oder in der die Basisfläche aufweisenden elektrischen Baugruppe, beispielsweise einer Leiterplatte, aufgenommen sein.

Vorzugsweise sind die beiden Sendeantennen mit ihren Hauptflächen parallel zueinander angeordnet und/oder sind die beiden Empfangsantennen mit ihren Hauptflächen parallel zueinander angeordnet. Besonders bevorzugt sind alle Antennen (Sendeantennen und Empfangsantennen) mit ihren Hauptflächen parallel zueinander angeordnet.

Vorzugsweise sind die beiden Sendeantennen auf derselben Höhenlage bzw. in derselben Beabstandung zu der Basisfläche angeordnet und/oder sind die beiden Empfangsantennen auf derselben Höhenlage bzw. in derselben Beabstandung zu der Basisfläche angeordnet. Besonders bevorzugt sind alle Antennen (Sendeantennen und Empfangsantennen) auf derselben Höhenlage bzw. in derselben Beabstandung zu der Basisfläche angeordnet.

Das gemeinsame Drehzentrum ist vorzugsweise als Mittelpunkt einer gedachten Verbindungslinie zwischen den beiden Mittelpunkten bzw. geometrischen Schwerpunkten der beiden Sendeantennen ausgebildet. Das Drehzentrum befindet sich somit vorzugsweise mittig zwischen den beiden Sendeantennen.

Erfindungsgemäß ist vorgesehen, dass die Sendeantennen um das Drehzentrum 180° zueinander verdreht angeordnet sind. Die erste Empfangsantenne weist zu beiden Sendeantennen denselben Mitte-zu-Mitte-Abstand auf.

Unter der "Mitte" bzw. dem "Mittelpunkt" einer Antenne, ausgehend von der bzw. von dem sich beispielsweise der Mitte-zu-Mitte-Abstand bestimmt, ist vorliegend insbesondere der geometrische Schwerpunkt der jeweiligen Antenne zu verstehen.

Die Antennenanordnung eignet sich insbesondere vorteilhaft, wenn die beiden Sendeantennen gegenphasig angeregt werden.

Der Erfinder hat erkannt, dass sich durch eine paarweise differentielle Anregung der Sendeantennen in der beschriebenen Anordnung sehr gute Isolationseigenschaften zwischen Sender und Empfänger erzielen lassen. Das differentielle Signal lässt sich dabei auch vorteilhaft von nur einer einzigen Empfangsantenne empfangen, falls die nachfolgend als "zweite Empfangsantenne" bezeichnete Antenne nicht vorgesehen sein soll.

Aufgrund der vorgeschlagenen Anordnung der Sendeantennen kommt es bei einer um 180° phasenverschobenen Einspeisung des Sendesignals in der ersten Empfangsantenne und/oder in der nachfolgend noch genannten, zweiten Empfangsantenne jeweils zu einer Kompensation der von den Sendeantennen übersprechenden elektromagnetischen Wellen. Auf diese Weise kann ein Übersprechen bestmöglich kompensiert werden.

Die vorgeschlagene Erfindung ermöglicht es außerdem, Daten im Vollduplex-Betrieb nahezu unabhängig von der Orientierung bzw. Ausrichtung der beiden Kommunikationspartner zueinander zu übertragen. Die beiden Kommunikationspartner können in einem, zwei oder in allen Rotationsfreiheitsgraden zueinander verdreht bzw. verkippt angeordnet sein, und dies nahezu unabhängig von einem etwaigen translatorischen Versatz. Dass es bei der vorliegend vorgeschlagenen drahtlosen Übertragung im Optimalfall nicht auf die Ausrichtung der beiden Kommunikationspartner zueinander ankommt, ist ein besonderer Vorteil der Erfindung und ermöglicht die Verwendung der Antennenanordnung für eine Vielzahl von Anwendungen, insbesondere für Übertragungen über kurze Wegstrecken bei undefinierter Ausrichtung der Kommunikationspartner zueinander.

Gleichzeitig ist die Komplexität der vorgeschlagenen Antennenanordnung gering und lässt sich daher technisch einfach und kostengünstig umsetzen. Die Erfindung ermöglicht damit ein kostenoptimiertes Design einer Vollduplex-Antennenanordnung, beispielsweise durch Heranziehen von Standard-Leiterplattenprozessen. Die vorgeschlagene Antennenanordnung ist einfach in beliebige Elektronikbaugruppen integrierbar.

In einer besonders bevorzugten Weiterbildung der Erfindung weisen die beiden Sendeantennen einen identischen Aufbau auf, insbesondere hinsichtlich Geometrie, Material und/oder Position des Einspeisepunktes auf der Hauptfläche.

Grundsätzlich können die beiden Sendeantennen aber auch einen unterschiedlichen Aufbau aufweisen, vorzugsweise aber zumindest einen ähnlichen Aufbau - insbesondere soweit dies technisch realisierbar ist. Durch einen identischen oder zumindest im Wesentlichen identischen Aufbau der Sendeantennen kann die Dämpfung gegenüber der zumindest einen Sendeantenne verbessert sein.

In einer bevorzugten Weiterbildung der Erfindung kann vorgesehen sein, dass die Antennenanordnung eine zweite planare Empfangsantenne aufweist, die zusammen mit der ersten Empfangsantenne eine Empfangsantennengruppe bildet und mit ihren Hauptflächen ebenfalls parallel zu der Basisfläche und um das gemeinsame Drehzentrum herum angeordnet ist. Vorzugsweise, aber nicht notwendigerweise, weist die zweite Empfangsantenne einen identischen oder zumindest einen im Wesentlich identischen Aufbau auf wie die erste Empfangsantenne.

Vorzugsweise sind die beiden Empfangsantennen um das Drehzentrum 180° zueinander verdreht angeordnet.

Insbesondere kann vorgesehen sein, dass die zweite Empfangsantenne zu beiden Sendeantennen denselben Mitte-zu-Mitte-Abstand aufweist wie die erste Empfangsantenne. Das gemeinsame Drehzentrum ist vorzugsweise als Mittelpunkt einer gedachten Verbindungslinie zwischen den beiden Mittelpunkten bzw. geometrischen Schwerpunkten der beiden Empfangsantennen ausgebildet. Das Drehzentrum befindet sich somit vorzugsweise mittig zwischen den beiden Empfangsantennen und mittig zwischen den beiden Sendeantennen.

Grundsätzlich kann sich die Erfindung zur Übertragung beliebiger elektromagnetischer Wellen mit beliebigen Wellenlängen bzw. Frequenzen eignen. Besonders vorteilhaft eignet sich die Erfindung allerdings zur Übertragung von elektromagnetischen Wellen im Frequenzbereich zwischen 40 GHz und 80 GHz, vorzugweise zwischen 50 GHz und 70 GHz, besonders bevorzugt zwischen 55 GHz und 65 GHz, ganz besonders bevorzugt von ungefähr 60 GHz.

Die Bandbreite der Übertragung kann beispielsweise 5 GHz bis 20 GHz betragen, insbesondere ungefähr 10 GHz betragen.

In einer vorteilhaften Weiterbildung der Erfindung kann vorgesehen sein, dass zumindest die erste Empfangsantenne (und vorzugsweise auch die zweite Empfangsantenne) und die Sendeantennen derart zueinander angeordnet sind, dass der Mitte-zu-Mitte-Abstand zwischen jeder Sende- und Empfangsantenne jeweils der halben Wellenlänge der zu übertragenden elektromagnetischen Welle entspricht oder zumindest im Wesentlichen der halben Wellenlänge der zu übertragenden elektromagnetischen Welle entspricht.

Vorzugsweise entspricht der Mitte-zu-Mitte-Abstand zwischen den Sendeantennen und den Empfangsantennen jeweils genau der halben Wellenlänge der zu übertragenden elektromagnetischen Welle.

Gemäß einer Weiterbildung der Erfindung kann vorgesehen sein, dass die erste Empfangsantenne einen identischen Aufbau oder zumindest einen im Wesentlichen identischen Aufbau aufweist wie die Sendeantennen. Insofern auch die vorstehend genannte zweite Empfangsantenne vorhanden ist, weisen vorzugsweise alle Antennen (also alle Empfangsantennen und alle Sendeantennen) einen identischen oder zumindest im Wesentlichen identischen Aufbau auf, insbesondere hinsichtlich Geometrie, Material und/oder Position des Einspeisepunktes auf der jeweiligen Hauptfläche der Antenne.

Vorzugsweise ist die erste Empfangsantenne (und optional auch die zweite Empfangsantenne) um das gemeinsame Drehzentrum 90° zu den Sendeantennen verdreht angeordnet.

Es kann vorgesehen sein, dass um das gemeinsame Drehzentrum umlaufend jeweils abwechselnd eine Sendeantenne und eine Empfangsantenne angeordnet ist, wobei jede Antenne zu der ihr vorgeordneten Antenne um 90° gedreht ist. Vorzugsweise sind dabei alle Antennen entlang des Umfangs in derselben Drehrichtung gedreht. Diese geometrische Drehrichtung kann schließlich bei entsprechender Anregung der Antennen die Drehrichtung einer zirkular polarisierten elektromagnetischen Welle definieren.

Vorzugsweise sind die Mittelpunkte aller Antennen auf einem gemeinsamen Kreisumfang angeordnet, dessen Mittelpunkt mit dem Drehzentrum zusammenfällt.

Gemäß einer Weiterbildung der Erfindung kann vorgesehen sein, dass zumindest die erste Empfangsantenne (und vorzugsweise auch die zweite Empfangsantenne) und die Sendeantennen derart angeordnet sind, dass deren jeweilige Hauptsymmetrieachse einen Orientierungswinkel von 40° bis 50° zu einer jeweiligen zwischen dem Mittelpunkt der entsprechenden Antenne und dem Drehzentrum verlaufenden Geraden ausbilden, vorzugsweise einen Orientierungswinkel von 43° bis 47°, besonders bevorzugt einen Orientierungswinkel von im Wesentlichen 45° oder genau 45°.

Durch die entsprechende Ausrichtung bzw. Orientierung der Antennen zueinander kann in bekannter Weise die Drehrichtung der Polarisation bestimmt werden (rechtsdrehend oder linksdrehend). Mit den Angaben in der vorliegenden Beschreibung wird beispielhaft eine rechtsdrehende Polarisation erzeugt; um hingegen eine linksdrehende Polarisation zu erzeugen können die Antennen jeweils um 90° gedreht angeordnet werden.

Als Hauptsymmetrieachse wird vorliegend die Symmetrieachse auf der Hauptfläche der jeweiligen Antenne mit der längsten Ausdehnung aller Symmetrieachsen bezeichnet, also insbesondere eine in Längsrichtung der Hauptfläche ausgerichtete oder diagonal auf der Hauptfläche ausgerichtete Symmetrieachse.

Es kann vorgesehen sein, dass die Hauptsymmetrieachsen der Sendeantennen und der Empfangsantennen orthogonal zueinander verlaufen. Vorzugsweise sind die einzelnen Antennen derart angeordnet, dass sich die Sendeantennen und die Empfangsantennen mit jeweils einer schmalen Seite und einer langen Seite gegenüberliegen.

In einer Ausgestaltung der Erfindung kann vorgesehen sein, dass zumindest die erste Empfangsantenne (und vorzugsweise auch die zweite Empfangsantenne) und die Sendeantennen einen jeweiligen außermittig versetzten Einspeisepunkt aufweisen, wobei der jeweilige außermittige Versatz (Abstand zum Mittelpunkt und/oder Position auf der Hauptfläche) bei allen Antennen identisch ist.

Durch den außermittig versetzten Einspeisepunkt kann eine Impedanzanpassung ermöglicht werden. Vorzugsweise ist der Einspeisepunkt derart gewählt, dass die Eingangsimpedanz 50 Ohm beträgt.

Der Einspeisepunkt einer jeweiligen Antenne kann vorzugsweise auf deren Hauptsymmetrieachse angeordnet sein. Grundsätzlich kann allerdings eine beliebige Anordnung des Einspeisepunktes auf der Hauptfläche der jeweiligen Antenne vorgesehen sein, insbesondere auch eine Position des Einspeisepunktes auf einer Geraden, die auf der Hauptfläche verläuft, und die einen Winkel von 45° zu der Hauptsymmetrieachse ausbildet.

In einer Weiterbildung der Erfindung kann vorgesehen sein, dass die elektromagnetische Welle von einer jeweiligen Speiseleitung in Nahfeldkopplung (vorzugsweise vornehmlich kapazitiv) in die Sendeantennen eingekoppelt und in Nahfeldkopplung (vorzugsweise vornehmlich kapazitiv) aus der Empfangsantenne oder den Empfangsantennen ausgekoppelt wird. Die Speiseleitung kann insbesondere innerhalb der die Basisfläche ausbildenden elektrische Baugruppe, insbesondere einer Leiterplatte, aufgenommen sein.

Eine auf elektromagnetischer Nahfeldkopplung basierende, vorzugsweise vornehmlich kapazitive Ein- und Ausspeisung der elektromagnetischen Welle ist insbesondere vorteilhaft, um den Einspeisepunkt besonders flexibel vorzugeben.

Grundsätzlich kann eine Ein- und Auskopplung allerdings auch auf andere Weise erfolgen.

Beispielsweise kann vorgesehen sein, dass die elektromagnetische Welle von einer unmittelbar in die Antenne (insbesondere in deren Hauptfläche) mündenden Speiseleitung eingekoppelt wird (z. B. eine Mikrostreifenleitung einer Leiterplatte). Es kann also eine direkte galvanische Ein- und Ausspeisung auf gleicher Ebene zur jeweiligen Antenne vorgesehen sein.

Es kann auch vorgesehen sein, dass die elektromagnetische Welle von einer unmittelbar in die Antenne (insbesondere in deren Hauptfläche) mündenden Durchkontaktierung ("Via") eingekoppelt wird, die mittelbar oder unmittelbar mit einer auf einer anderen Höhenlage verlaufenden Speiseleitung verbunden ist.

Außerdem kann vorgesehen sein, dass die elektromagnetische Welle mittels zumindest einer Zwischenantenne eingekoppelt wird, die parallel zu der Hauptfläche und der Speiseleitung angeordnet ist und die sich in einer Ebene zwischen der Hauptfläche und der Speiseleitung befindet. Es kann damit eine gestapelte Anordnung mit einer oder mehreren Zwischenantennen vorgesehen sein, beispielsweise eine gestapelte Anordnung mehrerer als Patchantennen und/oder Schlitzantennen ausgebildeten Zwischenantennen in einer gemeinsamen Leiterplatte. Durch die gestapelte Antennenanordnung kann die Übertragungsbandbreite optional weiter erhöht werden.

Grundsätzlich kann jede Antennenstruktur verwendbar sein, die zirkular polarisierte elektromagnetische Wellen zu erzeugen vermag.

Die Speiseleitung kann sich in Richtung auf den Einspeisepunkt verbreitern, um eine Impedanzanpassung zu ermöglichen.

Zur Realisierung einer noch vorteilhafteren Abstrahlcharakteristik, insbesondere einer gerichteten Abstrahlung der elektromagnetischen Welle entlang einer Hauptabstrahlrichtung kann vorgesehen sein, dass auf der von der gewünschten Hauptabstrahlrichtung abgewandten Seite der Antenne, also "unterhalb" der Antenne eine metallische bzw. elektrisch leitfähige Referenzelektrodenstruktur bzw. Masseplatte ausgebildet ist. Die Masseplatte kann beispielsweise als metallisierte Unterseite einer Leiterplatte ausgebildet sein, auf deren Oberseite die Hauptflächen der Antennen gebildet sind.

In einer vorteilhaften Weiterbildung der Erfindung kann vorgesehen sein, dass die Sendeantennen und zumindest die erste Empfangsantenne (und vorzugsweise auch die zweite Empfangsantenne) als Patchantennen oder als Schlitzantennen ausgebildet sind.

Vorzugsweise sind die Antennen als Patchantennen ausgebildet. Die Patchantennen können insbesondere als metallisierte Flächen auf oder in einer Leiterplatte ausgebildet sein. Die Schlitzantennen können hingegen in komplementärer Weise als entsprechende Ausnehmungen metallisierter Bereiche einer Leiterplatte ausgebildet sein.

Die Verwendung von Patchantennen oder Schlitzantennen ist lediglich eine vorteilhafte Möglichkeit zur Realisierung der erfindungsgemäßen Antennenanordnung.

Vorzugsweise werden die Patchantennen oder Schlitzantennen durch bekannte Leiterplattenfertigungsprozesse in einer additiven und/oder subtraktiven Schichttechnologie hergestellt. Die einzelnen Antennen können aber beispielsweise auch durch Tiefzieh- oder Stanzbiegeprozesse separat gefertigt werden.

In einer Weiterbildung der Erfindung kann vorgesehen sein, dass die jeweiligen Hauptflächen der Sendeantennen und zumindest der ersten Empfangsantenne (und vorzugsweise auch der zweiten Empfangsantenne) eine elliptische Geometrie aufweisen. Ebenfalls kann eine rechteckige Geometrie (mit unterschiedlichen Seitenlängen oder quadratisch) vorgesehen sein, beispielsweise mit genau einem Paar von sich diagonal gegenüberliegenden, abgeschrägten Ecken, insbesondere bei einer quadratischen Geometrie.

Grundsätzlich können auch noch weitere Geometrien vorgesehen sein, beispielsweise eine dreieckige Geometrie, eine kreisförmige Geometrie (insbesondere mit ausgestanzten Randbereichen, beispielsweise quadratisch ausgestanzten Randbereichen) oder sonstige Geometrien.

Bevorzugt ist allerdings die elliptische Geometrie, da hierdurch eine besonders vorteilhafte Abstrahlcharakteristik erreichbar sein kann. Insbesondere kann durch die elliptische Geometrie eine vorzugsweise vollständig zirkular polarisierte elektromagnetische Welle abgestrahlt werden mit einer Axial Ratio von idealerweise 1,0. Linear polarisierte Anteile können durch die elliptische Geometrie bestmöglich vermieden werden, weshalb die elliptische Geometrie auch die energieeffizienteste Antennenanordnung ermöglichen kann.

Im Falle einer Patchantenne können die metallisierten Flächen die entsprechende Geometrie aufweisen (elliptisch, rechteckig, etc.). Im Falle einer Schlitzantenne kann die entsprechende Ausnehmung in der metallisierten Fläche die genannten Geometrien aufweisen.

In einer Weiterbildung kann auch vorgesehen sein, dass die Antennenanordnung eine Schirmungsanordnung aufweist, die um die Sendeantennen und die zumindest eine Empfangsantenne herum angeordnet ist.

Vorzugsweise bildet die Schirmungsanordnung einen die Antennen im Wesentlichen hülsenförmig einhüllenden, orthogonal zu der Basisfläche verlaufenden Schirmungsmantel aus. Die Schirmungsanordnung kann insbesondere aus einzelnen Durchkontaktierungen ausgebildet sein, die sich durch eine die Basisfläche ausbildende elektrische Baugruppe (z. B. eine Leiterplatte) hindurch erstrecken, vorzugsweise in gleichmäßiger Anordnung, besonders bevorzugt in zwei oder mehr Reihen und ganz besonders bevorzugt mit denselben Abständen zueinander.

Vorzugsweise ist die Schirmungsanordnung zu allen Antennen gleichermaßen symmetrisch angeordnet.

Dadurch, dass die Antennenanordnung die genannte Schirmungsanordnung aufweist, kann die Antennenanordnung gegenüber der Umgebung abgeschirmt und außerdem die elektromagnetische Isolierung zusätzlich erhöht werden. Es kann mittels der Schirmungsanordnung vorzugsweise eine quasi-koaxiale Struktur für die Ein- bzw. Ausspeisepfade realisierbar sein.

Vorzugsweise ist die Antennenanordnung auf einer elektrischen Leiterplatte angeordnet. Das Substratmaterial der Leiterplatte kann beispielsweise der bekannte Verbundwerkstoff FR-4 sein (Verbundwerkstoff aus Glasfasern in Epoxidharz), um eine besonders kostengünstige Antennenanordnung bereitzustellen. Alternativ kann das Substratmaterial auch als Verbund aus Keramikpartikeln (Teflon) und Glasfasern in Epoxidharz ausgebildet sein, um dielektrische Verluste zu minimieren.

Die Erfindung betrifft auch eine Transceiveranordnung, aufweisend eine Antennenanordnung gemäß den vorstehenden und nachfolgenden Ausführungen und eine Schaltungsanordnung mit einer Sendeeinheit und einer Empfangseinheit. Die Sendeeinheit ist mit den beiden Sendeantennen verbunden, um eine elektromagnetische Welle durch differentielle Anregung der beiden Sendeantennen abzustrahlen. Die Empfangseinheit ist mit zumindest der ersten Empfangsantenne verbunden, um eine elektromagnetische Welle zumindest über die erste Empfangsantenne zu empfangen.

Vorzugsweise weist die Antennenanordnung der Transceiveranordnung auch die vorstehend genannte, zweite Empfangsantenne auf, wobei die Empfangseinheit somit mit den beiden Empfangsantennen verbunden ist, um die elektromagnetische Welle durch differentielle Auswertung der beiden Empfangsantennen zu empfangen.

Auf vorteilhafte Weise kann eine Transceiveranordnung mit einer Antennenanordnung bereitgestellt werden, die sich für die gleichzeitige bidirektionale Übertragung von Daten (Vollduplex) im gleichen Frequenzband ("Inband Full-Duplex") und unabhängig von der gegenseitigen Rotation bzw. Ausrichtung der Kommunikationspartner zueinander eignet.

Es kann vorgesehen sein, vier zirkular polarisiert angeregte Einzelantennen orthogonal zueinander anzuordnen, wobei die sich jeweils gegenüberliegenden Antennen zu einer Antennengruppe zusammengefasst und gegenphasig angeregt werden (differentielle Speisung). Eine der Antennengruppen kann für das Senden und die andere Antennengruppe für das Empfangen der Signale genutzt werden (vorstehend als Sendeantennengruppe mit den beiden Sendeantennen und Empfangsantennengruppe mit den beiden Empfangsantennen bezeichnet).

Durch die vorgeschlagene Antennenanordnung, insbesondere bei paarweise differentieller Anregung der einzelnen Antennen einer Antennengruppe, können sehr gute Isolationseigenschaften zwischen Sender und Empfänger erzielbar sein. Ferner kann durch die paarweise differentielle Anordnung der Antennengewinn gegenüber einer Einzelantenne entsprechend erhöht werden.

Mittels der vorgeschlagenen Transceiveranordnung können Daten unabhängig von der Orientierung oder Ausrichtung zweier Kommunikationspartner übertragen werden, bei gleichzeitig einfachem technischem Aufbau der Antennenanordnung. Die Erfindung kann vorteilhaft mit konventioneller Leiterplattentechnik umgesetzt werden, wobei grundsätzlich allerdings auch andere Techniken zur Herstellung möglich sind, beispielsweise unter Verwendung eines Hohlleiters.

In einer vorteilhaften Weiterbildung kann vorgesehen sein, dass die Sendeeinheit eine erste Signalverarbeitungskomponente und ein erstes Symmetrieglied (auch unter dem Begriff "Balun" bekannt) aufweist, um die Sendeantennen mit einem um 180° phasenverschobenen elektrischen Signal anzuregen.

Insofern auch ein differentieller Empfang der elektromagnetischen Welle vorgesehen ist, kann außerdem vorgesehen sein, dass die Empfangseinheit eine zweite Signalverarbeitungskomponente und ein zweites Symmetrieglied aufweist.

Das Symmetrieglied kann vorzugsweise als 180° Hybridkoppler (auch als "Rat-Race"-Wandler bekannt) ausgebildet sein. Alternativ kann aber auch eine andere Struktur vorgesehen sein, insbesondere ein Marchand-Balun.

Die Erfindung betrifft auch ein Kommunikationssystem, aufweisend eine erste Transceiveranordnung und eine zweite Transceiveranordnung, jeweils gemäß den vorstehenden und nachfolgenden Ausführungen, zur Bereitstellung einer drahtlosen Signalübertragung zwischen den jeweiligen Schaltungsanordnungen der Transceiveranordnungen.

Das erfindungsgemäße Kommunikationssystem kann besonders vorteilhaft zur drahtlosen Übertragung zwischen zueinander beweglich angeordneten elektrischen Einrichtungen verwendbar sein, vorzugsweise als Ersatz von Schleifkontakten. Das vorgeschlagene Kommunikationssystem kann vorteilhaft sein, wenn die beiden Kommunikationspartner, also die erste Transceiveranordnung und die zweite Transceiveranordnung, im Betrieb einen veränderbaren oder unbekannten Drehwinkel relativ zueinander aufweisen, so dass die Sendeantennen und Empfangsantennen nicht immer definiert aufeinander ausrichtbar sind.

Das erfindungsgemäße Kommunikationssystem kann sich insbesondere zur Verwendung mit Motoren bzw. rotierenden Maschinen oder Linearaktoren eignen. Mögliche Einsatzgebiete betreffen die Energietechnik (beispielsweise Windräder und Generatoren) und die Fahrzeugtechnik (insbesondere Elektromotoren, Generatoren, verstellbare Ausstattungsgegenstände wie Sitze, Außenspiegel oder sogar Autotüren). Die Erfindung eignet sich auch besonders vorteilhaft zur Verwendung in der Robotik im Bereich von Gelenkverbindungen, in der Medizintechnik oder allgemein in der Industrie, insbesondere auch wenn hermetisch abgeschlossene Systeme vorgesehen sind.

In einer vorteilhaften Weiterbildung kann vorgesehen sein, dass die beiden Transceiveranordnungen für die drahtlose Signalübertragung maximal 5 Meter voneinander beabstandet angeordnet sind, vorzugsweise maximal 2 Meter voneinander beabstandet angeordnet sind, besonders bevorzugt maximal 50 Zentimeter voneinander beabstandet angeordnet sind, ganz besonders bevorzugt maximal 10 Zentimeter voneinander beabstandet angeordnet sind, und noch weiter bevorzugt maximal 5 Zentimeter voneinander beabstandet angeordnet sind.

Grundsätzlich eignet sich die Erfindung besonders vorteilhaft zur Verwendung im Nahfeld bzw. zur drahtlosen Übertragung über kurze Wegstrecken. Die Erfindung kann sich generell aber auch zur Fernfeldübertragung bzw. zur Übertragung über weitere als die vorstehend genannten Strecken eignen. Grundsätzlich kann der Abstand zwischen den beiden Transceiveranordnungen daher beliebig sein, beispielweise auch größer sein als 5 Meter, beispielsweise 10 bis 20 Meter oder mehr betragen.

In einer vorteilhaften Weiterbildung kann vorgesehen sein, dass das Kommunikationssystem einen Steckverbinder aufweist, in dem die erste Transceiveranordnung angeordnet ist und einen mit dem Steckverbinder mechanisch verbindbaren Gegensteckverbinder aufweist, in dem die zweite Transceiveranordnung angeordnet ist.

Es kann somit ein kontaktloser Steckverbinder bzw. ein drahtloser Steckverbinder, also ein Steckverbinder mit einer Funkschnittstelle bereitgestellt werden. Die jeweilige Transceiveranordnung kann in dem Steckverbinder bzw. Gegensteckverbinder optional hermetisch abgeschlossen aufgenommen sein.

Vorzugsweise sind der Steckverbinder und der Gegensteckverbinder miteinander verrastbar. Der Steckverbinder kann zumindest ein erstes Rastmittel und der Gegensteckverbinder ein mit dem ersten Rastmittel korrespondierendes, zweites Rastmittel aufweisen. Die Rastmittel können beispielsweise als Rastnase, Schnapphaken, Federlasche, Rastausnehmung, Rücksprung oder sonstige Verrastmöglichkeit ausgebildet sein. Auch ein Rasthebel oder eine sonstige Sicherung der geschlossenen Steckverbindung kann vorgesehen sein.

Vorzugsweise ist der Steckverbinder relativ zu dem Gegensteckverbinder verdrehbar und/oder zumindest bereichsweise verschiebbar (insbesondere auch im verbundenen Zustand).

Merkmale, die im Zusammenhang mit einem der Gegenstände der Erfindung, namentlich gegeben durch die Antennenanordnung, die Transceiveranordnung oder das Kommunikationssystem beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1 % oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: eine erfindungsgemäße Antennenanordnung mit elliptischen Patchantennen in einer Draufsicht;
- Figur 2: eine beispielhafte, weitere Patchantenne zur Verwendung in der erfindungsgemäßen Antennenanordnung mit quadratischer Geometrie und zwei diagonal gegenüberliegenden, abgeschrägten Ecken;
- Figur 3: eine beispielhafte, weitere Patchantenne zur Verwendung in der erfindungsgemäßen Antennenanordnung mit quadratischer Geometrie und einer zentralen, schlitzförmigen Ausnehmung;
- Figur 4: eine beispielhafte, weitere Patchantenne zur Verwendung in der erfindungsgemäßen Antennenanordnung mit runder Geometrie und zwei quadratisch ausgestanzten Randbereichen;
- Figur 5: eine beispielhafte, weitere Patchantenne zur Verwendung in der erfindungsgemäßen Antennenanordnung mit dreieckiger Geometrie;
- Figur 6: eine beispielhafte, weitere Patchantenne zur Verwendung in der erfindungsgemäßen Antennenanordnung mit rechteckiger, länglicher Geometrie;
- Figur 7: eine erfindungsgemäße Antennenanordnung mit Nahfeldkopplung in einer seitlichen Schnittdarstellung;
- Figur 8: die Antennenanordnung der Figur 7 in einer Draufsicht;
- Figur 9: eine erfindungsgemäße Antennenanordnung mit direkter Kopplung mittels Durchkontaktierungen in einer seitlichen Schnittdarstellung;
- Figur 10: eine erfindungsgemäße Antennenanordnung mit direkter Kopplung mittels einer Mikrostreifenleitung in einer Draufsicht;
- Figur 11: eine erfindungsgemäße Antennenanordnung mit Kopplung über eine als Schlitzantenne ausgebildete Zwischenantenne in einer seitlichen Schnittdarstellung;
- Figur 12: eine erfindungsgemäße Antennenanordnung mit einer umlaufenden Schirmungsanordnung aus Durchkontaktierungen in einer Draufsicht;
- Figur 13: eine erfindungsgemäße Transceiveranordnung;
- Figur 14: ein erfindungsgemäßes Kommunikationssystem mit einem Steckverbinder und einem Gegensteckverbinder;
- Figur 15: ein weiteres erfindungsgemäßes Kommunikationssystem mit zueinander verdreht angeordneten Kommunikationspartnern; und
- Figur 16: Simulationsergebnisse der Übertragungs- und Isolationscharakteristik eines erfindungsgemäßen Kommunikationssystems.

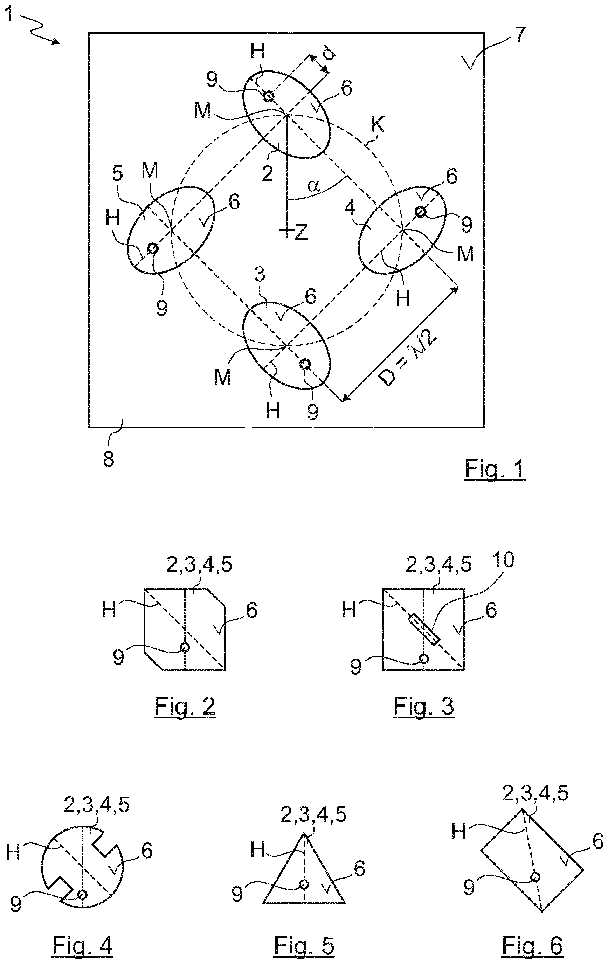

Figur 1 zeigt schematisiert eine erfindungsgemäße Antennenanordnung 1 zur Verwendung innerhalb eines Vollduplex-Kommunikationskanals. Die Antennenanordnung 1 weist eine aus einer ersten planaren Sendeantenne 2 und einer zweiten planaren Sendeantenne 3 gebildete Sendeantennengruppe auf, sowie zumindest eine erste planare Empfangsantenne 4. In den Ausführungsbeispielen ist die bevorzugte Ausgestaltung der Erfindung gezeigt, bei der zusätzlich zu der ersten Empfangsantenne 4 noch eine zweite planare Empfangsantenne 5 mit identischem Aufbau vorgesehen ist, die zusammen mit der ersten Empfangsantenne 4 eine Empfangsantennengruppe bildet. Dies ist allerdings nur beispielhaft und nicht einschränkend zu verstehen.

Alle Sendeantennen 2, 3 weisen in den Ausführungsbeispielen einen identischen Aufbau auf. Vorzugsweise weisen auch die Empfangsantennen 4, 5 einen identischen Aufbau mit den Sendeantennen 2, 3 auf, d. h. insbesondere Geometrie, Material und Einspeisepunkt der Antennen 2, 3, 4, 5 sind jeweils identisch.

Die Sendeantennen 2, 3 und die Empfangsantennen 4, 5 sind mit ihren jeweiligen Hauptflächen 6 parallel zu einer gemeinsamen Basisfläche 7 um ein gemeinsames Drehzentrum Z herum angeordnet. Die Basisfläche 7 ist vorzugsweise auf einer elektrischen Baugruppe ausgebildet, die die Antennen 2, 3, 4, 5 aufweist, insbesondere eine elektrische Leiterplatte 8. Das Drehzentrum Z ist vorzugsweise mittig zwischen den beiden Sendeantennen 2, 3 gebildet und im Ausführungsbeispiel außerdem auch mittig zwischen den beiden Empfangsantennen 4, 5 gebildet, was allerdings nicht einschränkend zu verstehen ist. In dem Ausführungsbeispiel sind alle Antennen 2, 3, 4, 5 mit ihren Mittelpunkten M auf einem gemeinsamen Kreisumfang K angeordnet, dessen Mittelpunkt mit dem Drehzentrum Z zusammenfällt.

Die Sendeantennen 2, 3 sind um das Drehzentrum Z 180° zueinander verdreht angeordnet. Auch die Empfangsantennen 4, 5 sind entsprechend um 180° zueinander verdreht angeordnet, wobei die Empfangsantennen 4, 5 außerdem jeweils um 90° zu den entlang des Kreisumfangs K benachbarten Sendeantennen 2, 3 verdreht angeordnet sind. Die Drehung der Antennen 2, 3, 4, 5 erfolgt dabei um das Drehzentrum Z umlaufend jeweils in dieselbe Richtung, im Ausführungsbeispiel rechts umlaufend.

Die erste Empfangsantenne 4 weist zu den beiden Sendeantennen 2, 3 denselben Mitte-zu-Mitte-Abstand D auf. Im Ausführungsbeispiel weist auch die zweite Empfangsantenne 5 zu beiden Sendeantennen 2, 3 denselben Mitte-zu-Mitte-Abstand D auf, wobei der Mitte-zu-Mitte-Abstand D der zweiten Empfangsantenne 5 mit dem der ersten Empfangsantenne 4 identisch ist. Hieraus ergibt sich insgesamt die dargestellte geometrische Anordnung der Figur 1.

Der Mitte-zu-Mitte-Abstand D der Empfangsantennen 4, 5 zu den entlang des Kreisumfangs K benachbarten Sendeantennen 2, 3 entspricht dabei vorzugsweise im Wesentlichen der halben Wellenlänge λ der zu übertragenden elektromagnetischen Welle, vorzugsweise genau der halben Wellenlänge λ der zu übertragenden elektromagnetischen Welle.

Vorzugsweise sind außerdem die Empfangsantennen 4, 5 und die Sendeantennen 2, 3 derart zueinander angeordnet, dass deren jeweilige Hauptsymmetrieachsen H einen Orientierungswinkel α von im Wesentlichen oder vorzugsweise genau 45° ausbilden. Dabei sind die Hauptsymmetrieachsen H der entlang des Kreisumfangs K benachbarten Antennen 2, 3, 4, 5 orthogonal zueinander ausgerichtet, wie dargestellt.

Die Antennen 2, 3, 4, 5 weisen einen jeweiligen außermittig versetzten Einspeisepunkt 9 auf, wobei der jeweilige außermittige Versatz d bei allen Antennen 2, 3, 4, 5 identisch ist. Vorzugsweise befindet sich der Einspeisepunkt 9 auf der Hauptsymmetrieachse H, dies ist allerdings nicht unbedingt erforderlich. Der Einspeisepunkt 9 wird in der Regel auf eine Eingangsimpedanz von 50 Ohm angepasst; hierbei sei angemerkt, dass sich auf der Hauptfläche 6 der jeweiligen Antenne 2, 3, 4, 5 dementsprechend auch mehrere mögliche Einspeisepunkte 9 ergeben können, weshalb die in den Ausführungsbeispielen angedeuteten Einspeisepunkte 9 nur exemplarisch zu verstehen sind. Grundsätzlich kann sogar vorgesehen sein, mehrere Einspeisepunkte 9 gleichzeitig zu verwenden, in der Regel ist jedoch ein einzelner Einspeisepunkt pro Antenne 2, 3, 4, 5 ausreichend.

Die dargestellte Antennenanordnung 1 ermöglicht eine außerordentlich effektive Isolation zwischen Sender und Empfänger, wenn die Sendeantennen 2, 3 der Sendeantennengruppe mit einem um 180° phasenverschobenen Signal angeregt werden und insbesondere, aber nicht notwendigerweise, wenn die Auswertung der empfangenen elektromagnetischen Welle durch die Empfangsantennen 4, 5 der Empfangsantennengruppe ebenfalls differentiell erfolgt. Gleichwohl ist der Aufbau der Antennenanordnung 1 mit technisch einfachen Mitteln möglich, beispielsweise durch einfache Leiterplattentechnik.

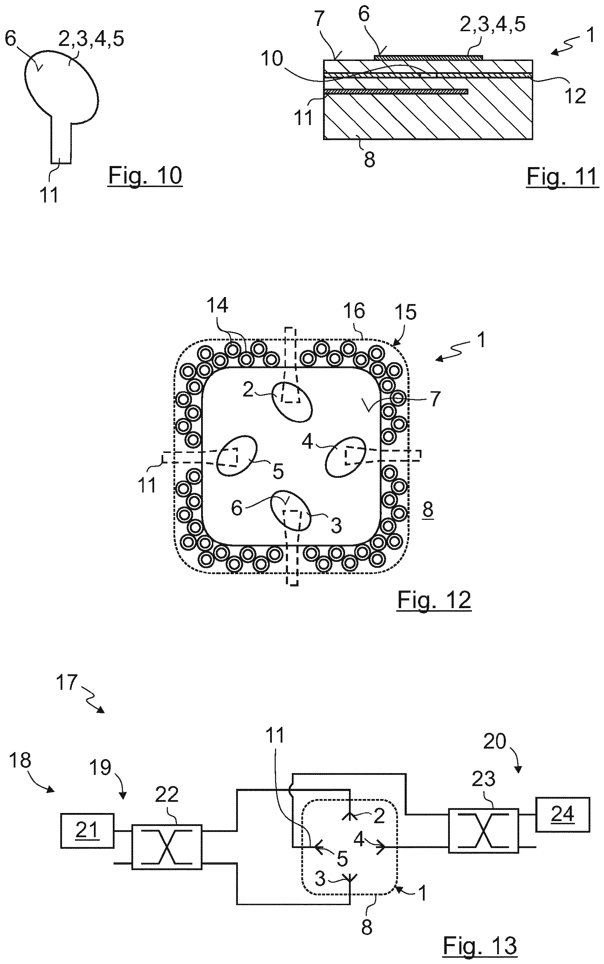

Die Antennen 2, 3, 4, 5 sind vorzugsweise als Patchantennen ausgebildet, wie in den meisten Ausführungsbeispielen dargestellt. Die Patchantenne kann insbesondere als elektrisch leitfähige Fläche bzw. metallisierte Fläche auf oder in der Leiterplatte 8 ausgebildet sein. Alternativ kann auch eine komplementäre Anordnung vorgesehen sein, wonach die Antennen 2, 3, 4, 5 als Schlitzantennen ausgebildet sind und entsprechende Ausnehmungen 10 in metallisierten Flächen aufweisen, beispielsweise in metallisierten Flächen der Leiterplatte 8 (vgl. beispielsweise Figur 3 und Figur 11).

Besonders bevorzugt weisen die jeweiligen Hauptflächen 6 der Antennen 2, 3, 4, 5 eine elliptische Geometrie auf, wie in Figur 1 und in einigen nachfolgenden Figuren dargestellt. Hierdurch kann eine besonders reine zirkulare Polarisation der elektromagnetischen Welle erzeugt werden, in der in Figur 1 dargestellten Antennenanordnung 1 beispielsweise eine rechtsdrehende zirkulare Polarisation (alternativ kann bei entsprechend um jeweils 90° verdrehter Anordnung der Antennen 2, 3, 4, 5 auch eine linksdrehende zirkulare Polarisation erzeugt werden). Alternativ können allerdings auch andere Geometrien der Antennen 2, 3, 4, 5 vorgesehen sein, von denen einige in den Figuren 2 bis 6 beispielhaft angedeutet sind.

Wie in Figur 2 gezeigt, kann beispielsweise eine quadratische Geometrie mit genau einem Paar von ausgestanzten, diagonal gegenüberliegenden Ecken vorgesehen sein. In diesem Fall befindet sich der Einspeisepunkt 9 vorzugsweise nicht auf der Hauptsymmetrieachse H, sondern auf einer zu der Hauptsymmetrieachse H um 45° verdrehten, durch den Mittelpunkt M der Antenne 2, 3, 4, 5 verlaufenden Geraden.

Eine weitere alternative Antenne 2, 3, 4, 5 ist in Figur 3 gezeigt, die eine schlitzförmige, diagonal angeordnete Ausnehmung 10 zentral innerhalb der elektrisch leitfähigen Hauptfläche 6 aufweist. Wiederum ist der Einspeisepunkt 9 vorzugsweise auf der um 45° zu der Hauptsymmetrieachse H ausgerichteten, durch den Mittelpunkt M der Antenne 2, 3, 4, 5 verlaufenden Geraden angeordnet.

Eine weitere alternative Antennengeometrie ist in Figur 4 gezeigt. Die Antenne 2, 3, 4, 5 ist kreisförmig ausgebildet und weist genau ein Paar von diagonal gegenüberliegenden, ausgestanzten quadratischen Abschnitten auf. Wiederum ist der Einspeisepunkt 9 auf der um 45° zu der Hauptsymmetrieachse H gekippten, durch den Mittelpunkt M verlaufenden Geraden angeordnet.

In Figur 5 ist als weiteres Beispiel eine Antenne 2, 3, 4, 5 mit dreieckiger Geometrie dargestellt, wobei der Einspeisepunkt 9 auf der Hauptsymmetrieachse H außermittig versetzt ist.

Figur 6 zeigt schließlich einen länglich rechteckigen Querschnitt einer Antenne 2, 3, 4, 5, wobei der Einspeisepunkt 9 wiederum auf der Hauptsymmetrieachse H angeordnet ist.

Wie bereits erwähnt, können sich auch noch weitere Einspeisepunkte 9 ergeben, beispielsweise in Figur 2 ein weiterer Einspeisepunkt 9 entlang der dargestellten Geraden über den Mittelpunkt der Antenne 2, 3, 4, 5 nach oben gespiegelt, oder in den Figuren 3, 4, 6 jeweils bis zu vier Einspeisepunkte 9.

Jede der genannten Antennen 2, 3, 4, 5 kann auch komplementär als jeweilige Schlitzantenne ausgebildet sein.

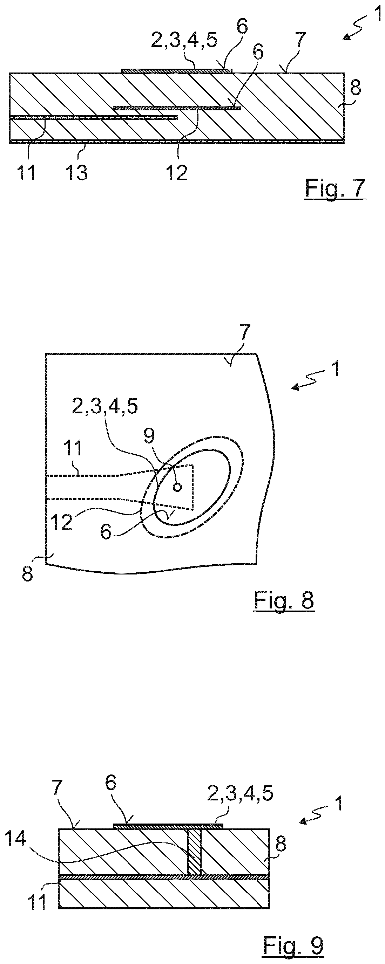

Zur Ein- und Auskopplung der elektromagnetischen Welle in die jeweilige Antenne 2, 3, 4, 5 sind verschiedene Varianten möglich. Die bevorzugte Ein- und Auskopplungstechnik ist in den Figuren 7 und 8 dargestellt. Vorzugsweise wird die elektromagnetische Welle von einer jeweiligen Speiseleitung 11 vornehmlich kapazitiv in die Sendeantennen 2, 3 eingekoppelt und vornehmlich kapazitiv aus der zumindest einen Empfangsantenne 4, 5 ausgekoppelt, was besonders gut anhand der in Figur 7 gezeigten Schnittdarstellung erkennbar ist.

Für eine vorteilhafte Impedanzanpassung kann die Speiseleitung 11 in Richtung des Mittelpunkts M der jeweiligen Antenne 2, 3, 4, 5 eine kontinuierliche Verbreiterung erfahren (vgl. Figur 8).

Eine gestapelte Anordnung bei der Ein- und Auskopplung in die jeweilige Antenne 2, 3, 4, 5 mittels einer oder mehrerer Zwischenantennen 12 kann die Bandbreite der Anordnung weiter erhöhen. Vorzugsweise ist die Hauptfläche 6 der Zwischenantenne 12 gegenüber der Antenne 2, 3, 4, 5 vergrößert. Insofern mehrere Zwischenantennen 12 vorgesehen sind, vergrößert sich deren Hauptfläche 6 mit dem Abstand von der entsprechenden Antenne 2, 3, 4, 5.

Um vorzugsweise eine gerichtete Abstrahlcharakteristik zu erhalten, kann optional eine abschließende Masseplatte 13 rückseitig der entsprechenden Antenne 2, 3, 4, 5 vorgesehen sein, wie in Figur 7 gut erkennbar. Dabei kann es sich beispielsweise um eine metallische Beschichtung der Leiterplatte 8 oder um ein Metallgehäuse handeln.

Als Alternative zu einer Nahfeldkopplung kann auch eine direkte Anregung vorgesehen sein, beispielsweise mittels in Figur 9 dargestellter Durchkontaktierung 14 der Leiterplatte 8 oder durch Zuführung mittels einer in die entsprechende Antenne 2, 3, 4, 5 mündenden Mikrostreifenleitung (vgl. Figur 10). Außerdem kann auch eine Einkopplung mittels einer als Schlitzantenne ausgebildeten Zwischenantenne 12 vorgesehen sein, wie in Figur 11 gezeigt.

Um die Isolationseigenschaften und die Abschirmung der Antennenanordnung 1 zu erhöhen und gegebenenfalls die Abstrahlcharakteristik weiter zu optimieren, kann eine Schirmungsanordnung 15 vorgesehen sein, wie in Figur 12 beispielhaft gezeigt.

Die Schirmungsanordnung 15 kann um die Sendeantennen 2, 3 und die zumindest eine Empfangsantenne 4, 5 herum angeordnet sein und die Antennen 2, 3, 4, 5 im Wesentlichen hülsenförmig einhüllen. Dabei kann die Schirmungsanordnung 15 vorzugsweise einen orthogonal zu der Basisfläche 7 verlaufenden Schirmungsmantel 16 ausbilden (in Figur 12 strichliniert angedeutet). Die Schirmungsanordnung 15 kann beispielsweise durch ein Metallblech ausgebildet sein oder alternativ, wie in der Figur 12 gezeigt, aus einzelnen Durchkontaktierungen 14 ausgebildet sein, die sich durch die Leiterplatte 8 hindurch erstrecken und vorzugsweise regelmäßig und ganz besonders bevorzugt zumindest zweireihig angeordnet sind.

In Figur 13 ist beispielhaft eine erfindungsgemäße Transceiveranordnung 17 dargestellt. Die Transceiveranordnung 17 weist eine Antennenanordnung 1 gemäß den vorstehenden Ausführungen auf sowie eine Schaltungsanordnung 18 mit einer Sendeeinheit (TX) 19 und einer Empfangseinheit (RX) 20.

Die Sendeeinheit 19 ist mit den beiden Sendeantennen 2, 3 verbunden, um eine elektromagnetische Welle durch differentielle Anregung der beiden Sendeantennen 2, 3 abzustrahlen. Hierfür weist die Sendeeinheit 19 eine erste Signalverarbeitungskomponente 21 und ein erstes Symmetrieglied 22 auf, um die Sendeantennen 2, 3 mit einem um 180° phasenverschobenen elektrischen Signal anzuregen. Das erste Symmetrieglied 22 ist vorzugsweise als 180° Hybridkoppler ausgebildet.

Die Empfangseinheit 20 ist vorzugsweise identisch ausgebildet und zum differentiellen Empfang mit den beiden Empfangsantennen 4, 5 über ein zweites Symmetrieglied 23, vorzugsweise ebenfalls ein 180° Hybridkoppler, verbunden, um die elektromagnetische Welle zu empfangen und an eine zweite Signalverarbeitungskomponente 24 weiterzuleiten.

Mittels zwei derartiger Transceiveranordnungen 17 kann ein drahtloses Kommunikationssystem 25 ausgebildet werden. Das erfindungsgemäße Kommunikationssystem 25 eignet sich dabei besonders vorteilhaft für eine kurzstreckige drahtlose Signalübertragung von beispielsweise maximal 5 Metern und in der Regel sogar kürzeren Strecken von beispielsweise maximal 5 Zentimeter. Durch die erfindungsgemäß vorgeschlagene Antennenanordnung 1 kann eine drahtlose Kommunikation selbst im Nahfeld nahezu unabhängig, vorzugsweise vollständig unabhängig, von der Ausrichtung der beiden Transceiveranordnungen 17 zueinander möglich sein.

Eine vorteilhafte Anwendung ist unter anderem die Robotik als Ersatz für beispielsweise Schleifkontakte im Bereich von Gelenkverbindung oder auch Anwendungen, bei denen eine Kommunikationsverbindung unter besonders widrigen Umgebungsbedingungen und daher vorzugsweise hermetisch abgeschirmt erfolgt.

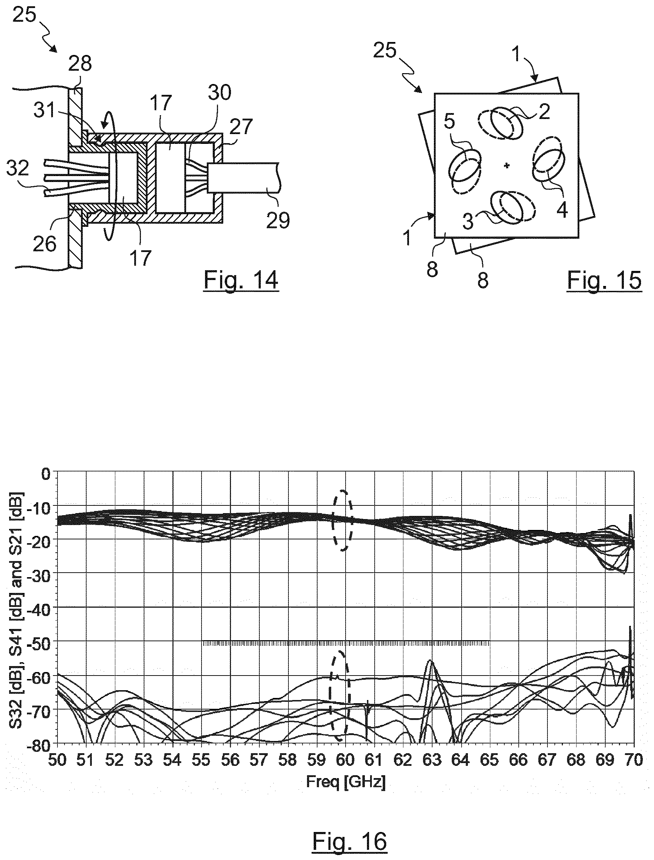

Beispielhaft ist in Figur 14 ein Kommunikationssystem 25 gezeigt, das einen Steckverbinder 26 aufweist, in dem eine erste Transceiveranordnung 17 angeordnet ist und das einen mit dem Steckverbinder 26 mechanisch verbindbaren Gegensteckverbinder 27 aufweist, in dem eine zweite Transceiveranordnung 17 angeordnet ist.

Der Steckverbinder 26 kann beispielsweise mit einem Gerätegehäuse 28 verbunden sein. Der Gegensteckverbinder 27 kann beispielsweise ein Kabelsteckverbinder sein, in den ein elektrisches Kabel 29 mit einzelnen elektrischen Leitungen 30 mündet. Der Steckverbinder 26 und der Gegensteckverbinder 27 können Rastmittel 31 aufweisen, um im verbundenen Zustand miteinander zu verrasten. In Figur 14 ist beispielhaft eine miteinander verrastete Steckverbindung aus einem Steckverbinder 26 und einem Gegensteckverbinder 27 gezeigt, die ein Verdrehen der Partner zueinander ermöglicht. Somit kann vorteilhaft eine kontaktlose bzw. drahtlose drehrichtungsunabhängige Steckverbindung bereitgestellt werden, um elektrische Signale zwischen dem Kabel 29 bzw. den elektrischen Leitungen 30 des Kabels 29 und elektrischen Leitern 32 innerhalb des Gerätegehäuses 28 zu übertragen.

Grundsätzlich sind allerdings beliebige weitere Anwendungen denkbar, beispielsweise Anwendungen in der Energietechnik oder in der Fahrzeugtechnik.

Beispielhaft ist ein weiteres Kommunikationssystem 25 in vereinfachter Darstellung in Figur 15 gezeigt, um den besonderen Vorteil der Erfindung bei der Übertragung von zueinander verdreht angeordneten Kommunikationspartnern nochmals zu verdeutlichen. In Figur 15 sind die Antennenanordnungen 1 zueinander koaxial, jedoch um das Drehzentrum herum verdreht angeordnet, wobei durch die vorgeschlagenen Antennenanordnungen 1 dennoch eine vorteilhafte Signalübertragung stattfinden kann. Auch ein Verkippen der Antennenanordnungen 1 zueinander kann dabei ausgeglichen werden, sowie ein außermittiger Versatz der jeweiligen Drehzentren.

In Figur 16 sind Simulationsergebnisse eines erfindungsgemäßen Kommunikationssystems 25 gezeigt, um die vorteilhaften Übertragungs- und Isolationseigenschaften einer erfindungsgemäßen Antennenanordnung 1 zu verdeutlichen. Simuliert wurde eine Antennenanordnung 1 wie in Figur 1 und in den Figuren 7 und 8 dargestellt, bei einer Übertragungsbandbreite von 10 GHz und einem Abstand zwischen den beiden Transceiveranordnungen 17 bzw. Antennenanordnungen 1 von 12 Millimetern. Die einzelnen Kurven der beiden Kurvenscharen stellen die Simulationsergebnisse bei unterschiedlichen Orientierungen / Verdrehwinkeln der beiden Kommunikationspartner zueinander dar. Einerseits sind dabei die hohen Isolationseigenschaften zwischen Sender und Empfänger desselben Transceivers erkennbar (Isolation innerhalb des vorgesehenen Frequenzbandes < 50 dB) und andererseits ist die hohe Unabhängigkeit der Transmissionseigenschaften von der Ausrichtung bzw. Orientierung der beiden Kommunikationspartner zueinander ersichtlich (vgl. obere Kurvenschar).

## Patentansprüche

1. Antennenanordnung (1) zur Verwendung innerhalb eines Vollduplex-Kommunikationskanals, aufweisend zumindest eine erste planare Empfangsantenne (4) und eine Sendeantennengruppe mit einer ersten planaren Sendeantenne (2) und einer zweiten planaren Sendeantenne (3), wobei die Sendeantennen (2, 3) und die erste Empfangsantenne (4) mit ihren jeweiligen Hauptflächen (6) parallel zu einer gemeinsamen Basisfläche (7) um ein gemeinsames Drehzentrum (Z) herum angeordnet sind, und wobei die Sendeantennen (2, 3) um das Drehzentrum (Z) 180° zueinander verdreht angeordnet sind, und wobei die erste Empfangsantenne (4) zu beiden Sendeantennen (2, 3) denselben Mitte-zu-Mitte-Abstand (D) aufweist.

2. Antennenanordnung (1) nach Anspruch 1,
**dadurch gekennzeichnet, dass**
die erste Sendeantenne (2) und die zweite Sendeantenne (3) einen identischen Aufbau aufweisen.

3. Antennenanordnung (1) nach Anspruch 1 oder 2,
**gekennzeichnet durch**
eine zweite planare Empfangsantenne (5) mit vorzugsweise identischem Aufbau wie die erste Empfangsantenne (4), die zusammen mit der ersten Empfangsantenne (4) eine Empfangsantennengruppe bildet und mit ihren Hauptflächen (6) parallel zu der Basisfläche (7) um das gemeinsame Drehzentrum (Z) herum angeordnet ist, wobei die Empfangsantennen (4, 5) um das Drehzentrum (Z) 180° zueinander verdreht angeordnet sind und wobei die zweite Empfangsantenne (5) zu beiden Sendeantennen (2, 3) denselben Mitte-zu-Mitte-Abstand (D) aufweist wie die erste Empfangsantenne (4).

4. Antennenanordnung (1) nach einem der Ansprüche 1 bis 3,
**dadurch gekennzeichnet, dass**
zumindest die erste Empfangsantenne (4) und die Sendeantennen (2, 3) derart zueinander angeordnet sind, dass der Mitte-zu-Mitte-Abstand (D) zwischen jeder Sendeantenne (2, 3) und Empfangsantenne (4, 5) jeweils der halben Wellenlänge (λ) der zu übertragenden elektromagnetischen Welle entspricht.

5. Antennenanordnung (1) nach einem der Ansprüche 1 bis 4,
**dadurch gekennzeichnet, dass**
die erste Empfangsantenne (4) einen identischen Aufbau aufweist wie die Sendeantennen (2, 3), und vorzugsweise um das gemeinsame Drehzentrum (Z) 90° zu den Sendeantennen (2, 3) verdreht angeordnet ist.

6. Antennenanordnung (1) nach einem der Ansprüche 1 bis 5,
**dadurch gekennzeichnet, dass**
zumindest die erste Empfangsantenne (4) und die Sendeantennen (2, 3) derart angeordnet sind, dass deren jeweilige Hauptsymmetrieachse (H) einen Orientierungswinkel (α) von 40° bis 50° zu einer jeweiligen zwischen dem Mittelpunkt (M) der entsprechenden Antenne (2, 3, 4, 5) und dem Drehzentrum (Z) verlaufenden Geraden ausbilden, vorzugsweise einen Orientierungswinkel (α) von 43° bis 47°, besonders bevorzugt einen Orientierungswinkel (α) von im Wesentlichen 45° oder genau 45°.

7. Antennenanordnung (1) nach einem der Ansprüche 1 bis 6,
**dadurch gekennzeichnet, dass**
die elektromagnetische Welle von einer jeweiligen Speiseleitung (11) durch Nahfeldkopplung in die Sendeantennen (2, 3) eingekoppelt und durch Nahfeldkopplung aus der zumindest einen Empfangsantenne (4, 5) ausgekoppelt wird.

8. Antennenanordnung (1) nach einem der Ansprüche 1 bis 7,
**dadurch gekennzeichnet, dass**
die Sendeantennen (2, 3) und zumindest die erste Empfangsantenne (4) als Patchantennen oder als Schlitzantennen ausgebildet sind.

9. Antennenanordnung (1) nach einem der Ansprüche 1 bis 8,
**dadurch gekennzeichnet, dass**
die jeweiligen Hauptflächen (6) der Sendeantennen (2, 3) und zumindest der ersten Empfangsantenne (4) eine elliptische Geometrie oder eine rechteckige Geometrie mit genau einem Paar von sich diagonal gegenüberliegenden, abgeschrägten Ecken aufweisen.

10. Antennenanordnung (1) nach einem der Ansprüche 1 bis 9,
**gekennzeichnet durch**
eine Schirmungsanordnung (15), die um die Sendeantennen (2, 3) und die zumindest eine Empfangsantenne (4, 5) herum angeordnet ist und die einen die Antennen (2, 3, 4, 5) im Wesentlichen hülsenförmig einhüllenden, orthogonal zu der Basisfläche verlaufenden Schirmungsmantel (16) ausbildet, wobei die Schirmungsanordnung (15) vorzugsweise aus einzelnen Durchkontaktierungen (14) ausgebildet ist, die sich durch eine die Basisfläche (7) ausbildende elektrische Baugruppe (8) hindurch erstrecken.

11. Transceiveranordnung (17), aufweisend eine Antennenanordnung (1) gemäß einem der Ansprüche 1 bis 10 und eine Schaltungsanordnung (18) mit einer Sendeeinheit (19) und einer Empfangseinheit (20), wobei die Sendeeinheit (19) mit den beiden Sendeantennen (2, 3) verbunden ist, um eine elektromagnetische Welle durch differentielle Anregung der beiden Sendeantennen (2, 3) abzustrahlen, und wobei die Empfangseinheit (20) zumindest mit der ersten Empfangsantenne (4) verbunden ist, um eine elektromagnetische Welle zumindest über die erste Empfangsantenne (4) zu empfangen.

12. Transceiveranordnung (17) nach Anspruch 11,
**dadurch gekennzeichnet, dass**
die Sendeeinheit (19) eine erste Signalverarbeitungskomponente (21) und ein erstes Symmetrieglied (22) aufweist, um die Sendeantennen (2, 3) mit einem um 180° phasenverschobenen elektrischen Signal anzuregen, wobei das erste Symmetrieglied (22) vorzugsweise als 180° Hybridkoppler ausgebildet ist.

13. Kommunikationssystem (25), aufweisend eine erste Transceiveranordnung (17) und eine zweite Transceiveranordnung (17), jeweils gemäß Anspruch 11 oder 12, zur Bereitstellung einer drahtlosen Signalübertragung zwischen den jeweiligen Schaltungsanordnungen (18) der Transceiveranordnungen (17).

14. Kommunikationssystem (25) nach Anspruch 13,
**dadurch gekennzeichnet, dass**
die beiden Transceiveranordnungen (17) für die drahtlose Signalübertragung maximal 5 Meter voneinander beabstandet angeordnet sind, vorzugsweise maximal 2 Meter voneinander beabstandet angeordnet sind, besonders bevorzugt maximal 50 Zentimeter voneinander beabstandet angeordnet sind, ganz besonders bevorzugt maximal 10 Zentimeter voneinander beabstandet angeordnet sind, und noch weiter bevorzugt maximal 5 Zentimeter voneinander beabstandet angeordnet sind.

15. Kommunikationssystem (25) nach Anspruch 13 oder 14,
**gekennzeichnet durch**
einen Steckverbinder (26), in dem die erste Transceiveranordnung (17) angeordnet ist und einen mit dem Steckverbinder (26) mechanisch verbindbaren Gegensteckverbinder (27), in dem die zweite Transceiveranordnung (17) angeordnet ist.
